# FASCICULE DE BREVET EUROPEEN

(11) **EP 0 873 977 B1**
(45) Date de publication et mention de la délivrance du brevet: **31.07.2002**
(21) Numéro de dépôt: 98400990.2
(22) Date de dépôt: 23.04.1998
(51) Int. Cl.: C03C 25/10

(54) **Procédé de revêtement d'une fibre optique**
Verfahren zur Beschichtung von optischen Fasern
Process for coating optical fiber

(30) Priorité: 24.04.1997 FR 9705069
(43) Date de publication de la demande: 28.10.1998
(73) Titulaire: ALCATEL, 75008 Paris (FR)
(72) Inventeur: Bourhis, Jean-François, 95150 Taverny (FR); Matau, Max, 92390 Villeneuve La Garenne (FR)
(74) Mandataire: Laroche, Danièle

(56) Documents cités:
- EP-A- 0 312 081
- EP-A- 0 314 174
- EP-A- 0 619 275
- DE-A- 4 226 344
- PATENT ABSTRACTS OF JAPAN vol. 14, no. 261 (C-725) [4204] , 6 juin 1990 & JP 02 074542 A (SUMITOMO ELECTRIC IND LTD), 14 mars 1990

## Description

L'invention concerne un procédé de revêtement d'une fibre optique présentant au moins un revêtement résultant d'un dépôt suivi d'une polymérisation d'un matériau déposé au moyen d'un applicateur.

Un tel procédé est notamment mis en oeuvre lors de la fabrication de fibres optiques destinées à former les éléments de base d'un câble de télécommunication.

D'une manière connue, la fibre optique est fabriquée par fibrage d'une préforme. Au cours du fibrage, la fibre est revêtue d'un ou plusieurs revêtements qui lui confèrent la tenue mécanique et donc les performances optiques requises.

En général, la fibre optique est revêtue d'un premier revêtement dit primaire, qui augmente sa résistance en traction et la protège de l'humidité. Un deuxième revêtement dit secondaire, est appliqué sur le substrat constitué par la fibre et le revêtement primaire pour répartir à l'intérieur du revêtement primaire les efforts de compression et de flexion auxquels peut être soumise la fibre.

De l'efficacité du ou des revêtements secondaire principalement la tenue des fibres aux microcourbures. La sensibilité aux microcourbures est mesurée par un test normalisé correspondant à des normes. d'utilisation des fibres et des câbles qui les contiennent.

L'amélioration de la tenue de fibres optiques aux microcourbures dépend à la fois de l'épaisseur et du module d'Young du ou des revêtements, en général obtenus à partir de matériaux dont le durcissement résulte d'une polymérisation engendrée par des rayonnements ultraviolets. La température à laquelle se produit la polymérisation détermine le module d'Young de ces revêtements.

Dans la demande de brevet européen EP-0 314 174, on propose de garantir le module d'Young à l'intérieur d'un intervalle de satisfaction en contrôlant la température d'une enceinte où a lieu la polymérisation du revêtement. La fibre sur laquelle a été déposé le matériau traverse cette enceinte où elle est exposée à une lampe à halogène dont le spectre contient des rayons ultraviolets et infrarouges.

Les rayons ultraviolets engendrent la polymérisation du matériau. Sous l'action des rayons infrarouges, la température de l'enceinte s'élève pour atteindre, en régime permanent, environ 400°C au voisinage de la lampe à halogène et environ 200°C au voisinage de la fibre.

La température moyenne de polymérisation du matériau utilisé dans cette demande de brevet, mais aussi de la plupart des résines à polymérisation sous ultraviolets, étant voisine de 100°C, il est prévu de refroidir l'enceinte. A cet effet, une circulation de vapeur d'eau mélangée à du dioxyde de carbone est mise en oeuvre pour absorber les rayons infrarouges et évacuer leur énergie hors de l'enceinte.

Des procédés tels que celui décrit précédemment peuvent présenter des inconvénients, notamment en faisant appel à un contrôle de température compliqué qui met en oeuvre une circulation de gaz à travers une enceinte.

Le but de l'invention est de fournir un procédé de revêtement d'une fibre optique présentant un revêtement dont la polymérisation est contrôlée d'une façon simple et flexible pour lui conférer un module d'Young garanti dans un intervalle de satisfaction.

La présente invention propose à cet effet un procédé de revêtement d'une fibre optique comportant les étapes suivantes :
- application d'un matériau de revêtement polymérisable à la surface de la fibre optique
- polymérisation dudit matériau pour obtenir un revêtement
**caractérisé en ce que** la température de la fibre optique avant l'application dudit matériau est portée à une valeur T déterminant la valeur de la température de polymérisation T' dudit matériau par les moyens définis dans la revendication 1.

La présente invention propose également, de manière plus précise, un procédé de revêtement d'une fibre optique comportant les étapes suivantes :
- application d'un premier matériau de revêtement polymérisable à la surface de la fibre optique
- polymérisation dudit premier matériau pour obtenir un revêtement dit revêtement primaire
- application d'un second matériau de revêtement polymérisable à la surface de la fibre optique revêtue dudit revêtement primaire
- polymérisation dudit second matériau pour obtenir un revêtement dit revêtement secondaire
**caractérisé en ce que** la température de la fibre optique avant l'application dudit second matériau est portée à une valeur T déterminant la valeur de la température de polymérisation T' dudit second matériau par les moyens définis dans la revendication 1.

Plus généralement, la température de la fibre optique avant l'application de tout matériau ultérieurement au second matériau peut être portée, selon l'invention, à une valeur T déterminant la valeur de la température de polymérisation T' du second matériau.

Des expériences ont montré que le contrôle de la température du substrat constitué par la fibre optique (éventuellement revêtue d'un ou plusieurs revêtements) effectué en amont de l'enceinte où a lieu la polymérisation était suffisant pour garantir le module d'Young du revêtement à polymériser sans qu'il soit nécessaire, comme l'enseignement de l'art antérieur pouvait le laisser croire, de contrôler la température de l'enceinte elle-même où a lieu la polymérisation.

Il en résulte la possibilité d'effectuer les étapes de contrôle de la température du substrat et de polymérisation du revêtement en deux lieux différents d'un dispositif de revêtement de la fibre optique.

De manière générale, l'invention propose donc de contrôler de la température de polymérisation d'un quelconque des revêtements appliqués sur une fibre optique en portant cette fibre, avant l'application du matériau destiné à constituer le revêtement concerné, à la température voulue, et ce aussi bien dans le cas où la fibre ne comporte qu'un seul revêtement, que dans le cas où elle en comporte deux, un primaire et un secondaire, ou dans le cas où elle en comporte plus de deux.

La présente invention concerne également un dispositif de revêtement d'une fibre optique comprenant
- un applicateur d'un matériau de revêtement polymérisable à la surface de la fibre optique
- une enceinte de polymérisation dudit matériau pour obtenir un revêtement
**caractérisé en ce qu'**il comprend en outre un four situé avant ledit applicateur pour conférer à la fibre optique une température T déterminant la température de polymérisation T' dudit matériau par les moyens définis dans la revendication 5.

Plus généralement, l'invention propose un Dispositif de revêtement d'une fibre optique comprenant n ensembles (n étant un entier supérieur ou égal à 2) comprenant chacun :
- un applicateur d'un matériau de revêtement polymérisable à la surface de la fibre optique
- une enceinte de polymérisation dudit matériau pour obtenir un revêtement
**caractérisé en ce qu'**il comprend en outre, pour tout entier k compris entre 2 et n, entre l'enceinte de polymérisation de l'ensemble k-1 et l'applicateur de l'ensemble k, un four pour conférer à la fibre optique revêtue une température T déterminant la température de polymérisation T' du matériau appliqué par l'applicateur de l'ensemble k par les moyens définis dans la revendication 7.

Avantageusement, un four apporte par rapport à une circulation de gaz traversant une enceinte où à lieu la polymérisation du revêtement, une grande simplification du dispositif de revêtement.

Un deuxième avantage du dispositif et du procédé selon l'invention tient dans la flexibilité de l'apport d'énergie, le four transférant au substrat une quantité de chaleur à volonté.

D'autres caractéristiques et avantages de l'invention apparaîtront à la lecture de la description d'un exemple de réalisation de l'invention illustrés par les figures.
- La figure 1 montre de façon schématique un dispositif de fibrage et de revêtement selon l'art antérieur.
- La figure 2 montre un dispositif de revêtement selon l'invention.
- La figure 3 montre une corrélation expérimentale entré la tenue aux microcourbures d'une fibre optique fabriquée selon l'invention et la vitesse de fibrage.

Le procédé selon l'invention est destiné à la fabrication de fibres optiques, telles que celles qui sont utilisées dans les câbles de télécommunications.

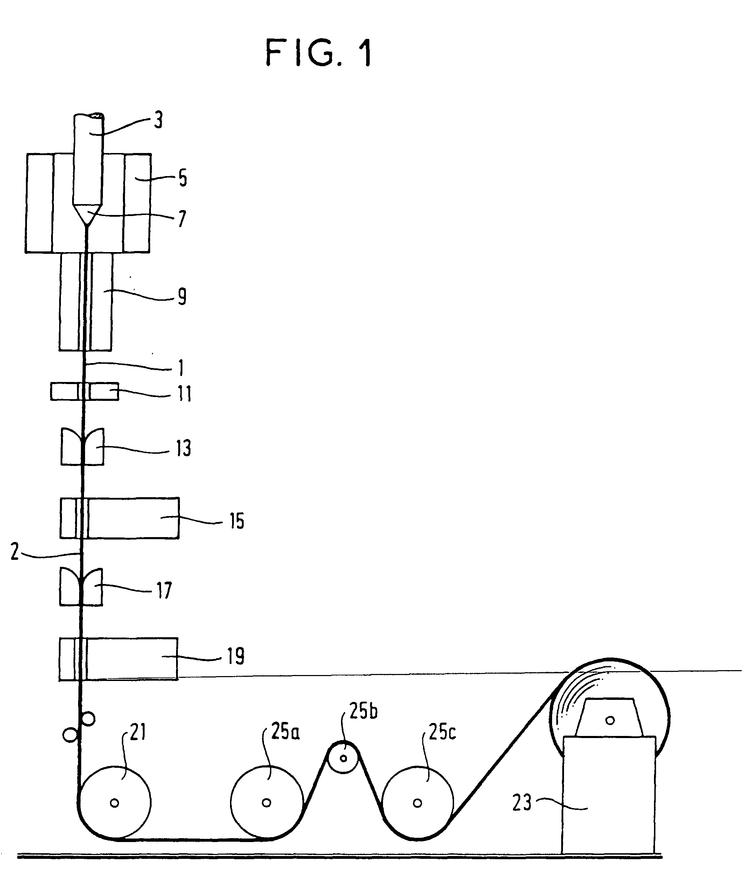

La fibre optique est fabriquée à partir d'une préforme, qui est ramollie à l'une de ses extrémités, par une enceinte thermique. Sur la figure 1, une préforme 3 est installée dans une enceinte thermique 5. Une fibre optique 1 est étirée à partir d'un cône de fibrage 7, puis à travers un tube de refroidissement 9. Un appareil optique 11 mesure le diamètre de la fibre à la sortie du tube de refroidissement 9.

Au cours du fibrage, la fibre est revêtue d'un premier revêtement, dit primaire, qui augmente sa résistance en traction et la protège de l'humidité. Un deuxième revêtement, dit secondaire, est appliqué sur le substrat constitué par la fibre et le revêtement primaire, pour répartir à l'intérieur du revêtement primaire les efforts de compression et de flexion auxquels peut être soumise la fibre.

Sur la figure 1, un premier applicateur 13 dépose sur la fibre 1 un premier matériau, constitué par exemple d'une résine polymère photosensible aux rayons ultraviolets. La résine est polymérisée au passage de la fibre optique dans une première enceinte 15 dans laquelle est installée une lampe à halogène. Un deuxième applicateur 17 dépose, sur le substrat 2 constitué par la fibre optique revêtue du premier revêtement, un deuxième matériau également à base d'une résine polymère photosensible aux rayons ultraviolets. Cette résine est polymérisée au passage de la fibre optique dans une deuxième enceinte 19 pourvue d'une lampe à halogène.

La fibre optique 1 revêtue des revêtements primaire et secondaire passe par un cabestan 21 puis est enroulée sur bobinoir 23. Des poulies 25a, 25b et 25c permettent de régler la vitesse de fibrage.

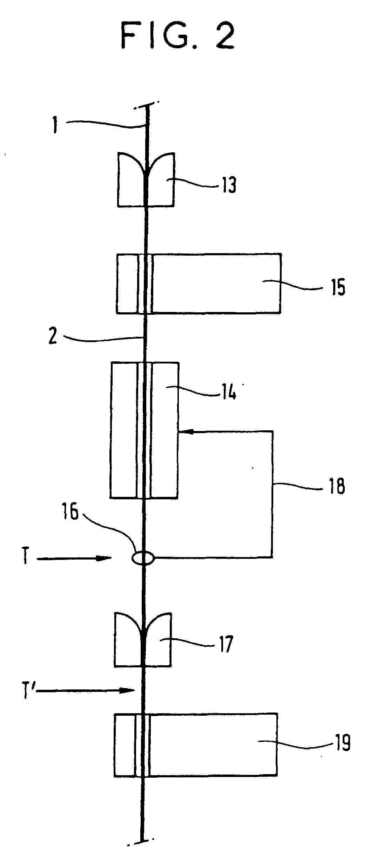

Selon l'invention, un four est placé entre la première enceinte de polymérisation 15 et le deuxième applicateur 17. Après avoir traversé le four 14, le substrat acquiert une température déterminant la température de polymérisation du deuxième matériau. Sur la figure 2, le substrat 2 traverse le four 14, qui lui confère une température T.

Une partie de la quantité de chaleur acquise par le substrat lors du passage dans le four est cédée au milieu ambiant, par exemple l'air d'une salle où est mis en oeuvre le procédé, et au matériau du deuxième revêtement appliqué par le deuxième applicateur, qui se trouve à une température plus faible que le substrat. Cet échange de chaleur est responsable d'une légère diminution de la température du substrat revêtu du matériau du deuxième revêtement. Cette température T' est la température à laquelle la polymérisation du matériau du revêtement secondaire a lieu dans l'enceinte 19 pourvue d'une lampe à halogène.

La diminution de température de T à T' étant limitée, la température T' de polymérisation du deuxième revêtement est déterminée par la température T acquise par le substrat 2 à la sortie du four 14, à l'intérieur d'un intervalle qui correspond à l'intervalle de satisfaction désiré pour le module d'Young du deuxième revêtement.

Dans un mode de réalisation particulier de l'invention, la température T du substrat 2 est mesurée par un capteur de température 16 placé entre le four 14 et le deuxième applicateur 17. Le capteur de température 16 est relié au four 14 par une liaison électrique 18 pour permettre d'asservir la température du four.

Cet asservissement permet au four de transférer au substrat une quantité de chaleur suffisante pour que la température de polymérisation du revêtement secondaire conduise au module d'Young désiré à l'intérieur d'un intervalle de satisfaction.

L'efficacité du revêtement secondaire vis-à-vis de la tenue d'une fibre optique aux microcourbures dépend de l'épaisseur de ce revêtement et de son module d'Young.

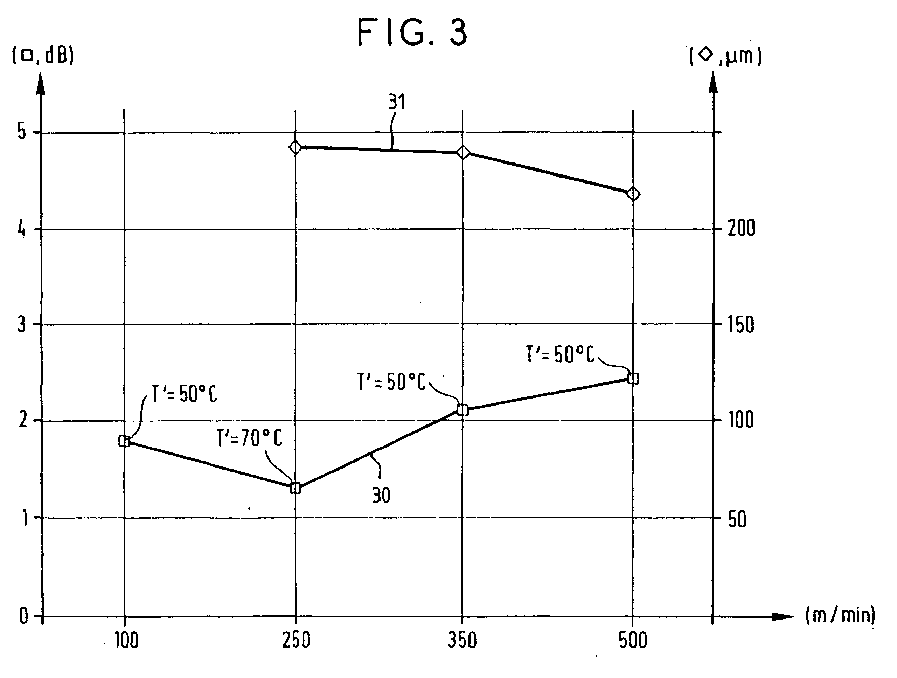

Sur la figure 3, la courbe 30 donne, en fonction de la vitesse de fibrage mesurée en mètres par minute (m/min) l'atténuation, mesurée en décibel (dB), d'une fibre optique revêtue obtenue sans utiliser le dispositif selon l'invention. L'atténuation mesurée est celle engendrée par le pincement d'une fibre optique entre deux tamis. Cette atténuation, selon un test normalisé, permet de déterminer la tenue aux microcourbures de la fibre optique : plus cette atténuation est faible, meilleure est la tenue de la fibre aux microcourbures. Une estimation de la température de polymérisation T' est indiquée pour chaque point de la courbe 30.

Les points expérimentaux montrent que la vitesse de fibrage influence la tenue aux microcourbures par l'intermédiaire de la température de polymérisation T' du revêtement secondaire. La meilleure tenue aux microcourbures est obtenue à une vitesse de fibrage de 250 m/min avec une température de polymérisation de l'ordre de 70°C.

Cette température détermine un optimum du module d'Young du revêtement secondaire. L'optimisation du module d'Young aux différentes vitesses de fibrage est simplement réalisée par le procédé selon l'invention, dans lequel le four 14 de la figure 2 est mis en fonctionnement pour conférer au substrat 2 une température T déterminant une température de polymérisation T de l'ordre de 70°C.

Le point expérimental correspondant à une vitesse de fibrage de 500 m/min présente une atténuation supérieure à celle du point correspondant à une vitesse de fibrage de 350 m/min. La température de polymérisation T' de l'ordre de 50°C étant identique pour les deux points, la différence d'atténuation est corrélée à une différence d'épaisseur du revêtement secondaire mesurée en micromètre (µm) et portée sur la courbe 31 de la figure 3.

Il en résulte que l'optimisation du module d'Young aux différentes vitesses de fibrage est pleinement efficace en maintenant une épaisseur constante du revêtement secondaire.

## Revendications

1. Procédé de revêtement d'une fibre optique comportant les étapes suivantes :
• application d'un matériau de revêtement polymérisable à la surface de la fibre optique
• polymérisation dudit matériau pour obtenir un revêtement
**caractérisé en ce que :**
• avant l'application dudit matériau, on porte à l'aide de moyens de chauffage (14) la fibre optique à une température T en sortie desdits moyens de chauffage (14), ladite température T déterminant la température de polymérisation T' dudit matériau
• la température desdits moyens de chauffage (14) est asservie à la température T souhaitée.

2. Procédé de revêtement d'une fibre optique comportant les étapes suivantes :
• application d'un premier matériau de revêtement polymérisable à la surface de la fibre optique
• polymérisation dudit premier matériau pour obtenir un revêtement dit revêtement primaire
• application d'un second matériau de revêtement polymérisable à la surface de la fibre optique revêtue dudit revêtement primaire
• polymérisation dudit second matériau pour obtenir un revêtement dit revêtement secondaire
**caractérisé en ce que :**
• avant l'application dudit second matériau, on porte à l'aide de moyens de chauffage (14) la fibre optique à une température T en sortie desdits moyens de chauffage (14), ladite température T déterminant la température de polymérisation T' dudit second matériau
• la température desdits moyens de chauffage (14) est asservie à la température T souhaitée.

3. Procédé selon la revendication 2 **caractérisé en ce que** la température de la fibre optique avant l'application de tout matériau ultérieurement audit second matériau est portée à une valeur (T) déterminant la valeur de la température de polymérisation (T') dudit second matériau.

4. Procédé selon l'une des revendications 1 à 3, **caractérisé en ce que** la polymérisation est effectuée par exposition du ou des matériaux polymérisables aux rayonnements ultraviolets.

5. Dispositif de revêtement d'une fibre optique (1) comprenant :
• un applicateur (13) d'un matériau de revêtement polymérisable à la surface de la fibre optique
• une enceinte de polymérisation (15) dudit matériau pour obtenir un revêtement
**caractérisé en ce qu'**il comprend en outre :
• un four (14) situé avant ledit applicateur (13) pour conférer à la fibre optique une température T en sortie dudit four (14), ladite température T déterminant la température de polymérisation T' dudit matériau
• un capteur de température (16) placé entre entre ledit four (14) et ledit applicateur (13) pour asservir la température dudit four (14) de sorte que la fibre en sortie dudit four (14) a la température T souhaitée.

6. Dispositif de revêtement d'une fibre optique (1) comprenant :
• un premier applicateur (13) d'un premier matériau de revêtement polymérisable à la surface de la fibre optique
• une première enceinte de polymérisation (15) dudit premier matériau pour obtenir un revêtement dit revêtement primaire
• un second applicateur (17) d'un second matériau de revêtement polymérisable à la surface de la fibre optique revêtue dudit revêtement primaire
• une seconde enceinte de polymérisation (19) dudit second matériau pour obtenir un revêtement dit revêtement secondaire
**caractérisé en ce qu'**il comprend en outre :
• un four (14) situé entre ladite première enceinte de polymérisation (15) avant ledit second applicateur (17) pour conférer à la fibre optique une température T en sortie dudit four (14), ladite température T déterminant la température de polymérisation T' dudit second matériau,
• un capteur de température (16) placé entre entre ledit four (14) et ledit second applicateur (17) pour asservir la température dudit four (14) de sorte que la fibre en sortie dudit four (14) a la température T souhaitée.

7. Dispositif de revêtement d'une fibre optique (1) comprenant n ensembles (n étant un entier supérieur ou égal à 2) comprenant chacun :
• un applicateur d'un matériau de revêtement polymérisable à la surface de la fibre optique
• une enceinte de polymérisation (15) dudit matériau pour obtenir un revêtement
**caractérisé en ce qu'**il comprend en outre, pour tout entier k compris entre 2 et n :
• entre l'enceinte de polymérisation de l'ensemble k-1 et l'applicateur de l'ensemble k, un four pour conférer à la fibre optique revêtue une température T en sortie dudit four, ladite température T déterminant la température de polymérisation T' du matériau appliqué par l'applicateur de l'ensemble k.
• un capteur de température placé entre entre ledit four et l'applicateur de l'ensemble k pour asservir la température dudit four de sorte que la fibre en sortie dudit four a la température T souhaitée.

## Patentansprüche

1. Verfahren zur Beschichtung einer optischen Faser, welches die folgenden Schritte umfasst:
• Aufbringen eines polymerisierbaren Beschichtungsmaterials auf die Oberfläche der optischen Faser
• Polymerisation des Materials zum Gewinnen einer Beschichtung
**dadurch gekennzeichnet, dass**:
• vor dem Aufbringen des Materials die optische Faser mithilfe von Heizmitteln (14) am Ausgang der Heizmittel (14) auf eine Temperatur T gebracht wird, wobei die Temperatur T die Polymerisationstemperatur T' des Materials bestimmt
• die Temperatur der Heizmittel (14) auf die gewünschte Temperatur T geregelt wird.

2. Verfahren zur Beschichtung einer optischen Faser, welches die folgenden Schritte umfasst:
• Aufbringen eines ersten polymerisierbaren Beschichtungsmaterials auf die Oberfläche der optischen Faser
• Polymerisation des ersten Materials zum Gewinnen einer sogenannten primären Beschichtung
• Aufbringen eines zweiten polymerisierbaren Beschichtungsmaterials auf die Oberfläche der mit der primären Beschichtung beschichteten optischen Faser
• Polymerisation des zweiten Materials zum Gewinnen einer sogenannten sekundären Beschichtung
**dadurch gekennzeichnet, dass:**
• vor dem Aufbringen des zweiten Materials die optische Faser mithilfe von Heizmitteln (14) am Ausgang der Heizmittel (14) auf eine Temperatur T gebracht wird, wobei die Temperatur T die Polymerisationstemperatur T' des zweiten Materials bestimmt
• die Temperatur der Heizmittel (14) auf die gewünschte Temperatur T geregelt wird.

3. Verfahren nach Anspruch 2, **dadurch gekennzeichnet, dass** die Temperatur der optischen Faser vor dem späteren Aufbringen jedes Materials auf das zweite Material auf einen Wert (T) gebracht wird, der den Wert der Polymerisationstemperatur (T') des zweiten Materials bestimmt.

4. Verfahren nach einem der Ansprüche 1 bis 3, **dadurch gekennzeichnet, dass** die Polymerisation erfolgt, indem das oder die polymerisierbaren Materialien einer ultravioletten Strahlung ausgesetzt werden.

5. Vorrichtung zur Beschichtung einer optischen Faser (1) mit:
• einer Vorrichtung zum Aufbringen (13) eines polymerisierbaren Beschichtungsmaterials auf die Oberfläche der optischen Faser
• einem Raum zur Polymerisation (15) des Materials zum Gewinnen einer Beschichtung
**dadurch gekennzeichnet, dass** sie ferner umfasst:
• einen vor der Aufbringvorrichtung (13) befindlichen Ofen (14) um der optischen Faser am Ausgang des Ofens (14) eine Temperatur T zu geben, wobei die Temperatur T die Polymerisationstemperatur T' des Materials bestimmt
• einen zwischen dem Ofen (14) und der Aufbringvorrichtung (13) platzierten Temperaturaufnehmer (16) zum Regeln der Temperatur des Ofens (14), derart dass die Faser am Ausgang des Ofens (14) die gewünschte Temperatur T hat.

6. Vorrichtung zur Beschichtung einer optischen Faser (1) mit:
• einer ersten Vorrichtung zum Aufbringen (13) eines ersten polymerisierbaren Beschichtungsmaterials auf die Oberfläche der optischen Faser
• einem ersten Raum zur Polymerisation (15) des ersten Materials zum Gewinnen einer sogenannten primären Beschichtung
• einer zweiten Vorrichtung zum Aufbringen (17) eines zweiten polymerisierbaren Beschichtungsmaterials auf die Oberfläche der mit der primären Beschichtung beschichteten optischen Faser
• einem ersten Raum zur Polymerisation (19) des zweiten Materials zum Gewinnen einer sogenannten sekundären Beschichtung
**dadurch gekennzeichnet, dass** sie ferner umfasst:
• einen zwischen dem ersten Polymerisationsraum (15) und der zweiten Aufbringvorrichtung (17) befindlichen Ofen um der optischen Faser am Ausgang des Ofens (14) eine Temperatur T zu geben, wobei die Temperatur T die Polymerisationstemperatur T' des zweiten Materials bestimmt
• einen zwischen dem Ofen (14) und der zweiten Aufbringvorrichtung (17) platzierten Temperaturaufnehmer (16) zum Regeln der Temperatur des Ofens (14), derart dass die Faser am Ausgang des Ofens (14) die gewünschte Temperatur T hat.

7. Vorrichtung zur Beschichtung einer optischen Faser (1) mit n Sätzen (n ist eine ganze Zahl größer oder gleich 2), von denen jeder umfasst:
• eine Vorrichtung zum Aufbringen eines polymerisierbaren Beschichtungsmaterials auf die Oberfläche der optischen Faser
• einen Raum zur Polymerisation (15) des Materials zum Gewinnen einer Beschichtung
**dadurch gekennzeichnet, dass** sie für alle ganzen k zwischen 2 und n ferner umfasst:
• einen zwischen dem Polymerisationsraum des Satzes k-1 und der Aufbringvorrichtung des Satzes k befindlichen Ofen um der beschichteten optischen Faser am Ausgang des Ofens eine Temperatur T zu geben, wobei die Temperatur T die Polymerisationstemperatur T' des durch die Aufbringvorrichtung des Satzes k aufgebrachten Materials bestimmt,
• einen zwischen dem Ofen und der Aufbringvorrichtung des Satzes k platzierten Temperaturaufnehmer zum Regeln der Temperatur des Ofens, derart dass die Faser am Ausgang des Ofens die gewünschte Temperatur T hat.

## Claims

1. A method of coating an optical fiber, the method comprising the following steps:
· applying a polymerizable coating material to the surface of the optical fiber; and
· polymerizing said material to obtain a coating;
the method being **characterized in that**:
· before applying said material, heater means (14) are used to bring the optical fiber to a temperature T on leaving said heater means (14), said temperature T determining the temperature T' at which said material polymerizes; and
· the temperature of said heater means (14) is servo-controlled on the desired temperature T.

2. A method of coating an optical fiber, the method comprising the following steps:
· applying a first polymerizable coating material to the surface of the optical fiber;
· polymerizing said first material to obtain a primary coating;
· applying a second polymerizable coating material to the surface of the optical fiber coated in said primary coating; and
· polymerizing said second material to obtain a secondary coating;
the method being **characterized in that**:
· before applying said second material, heater means (14) are used to bring the optical fiber to a temperature T on leaving said heater means (14), said temperature T determining the temperature T' at which said second material polymerizes; and
· the temperature of said heater means (14) is servo-controlled on the desired temperature T.

3. A method according to claim 2, **characterized in that** the temperature of the optical fiber before applying any material subsequent to said second material is raised to a value T determining the value T' of the temperature at which said second material polymerizes.

4. A method according to any one of claims 1 to 3, **characterized in that** the polymerization is performed by exposing the polymerizable material(s) to ultraviolet radiation.

5. Apparatus for coating an optical fiber (1), the apparatus comprising:
· an applicator (13) for applying a polymerizable coating material to the surface of the optical fiber; and
· a polymerization enclosure (15) for polymerizing said material to obtain a coating;
the apparatus being **characterized in that** it further comprises:
· an oven (14) situated ahead of said applicator (13) to confer to the optical fiber a temperature T on leaving said oven (14), said temperature T determining the temperature T' at which said material polymerizes; and
· a temperature sensor (16) placed between said oven (14) and said applicator (13) to servo-control the temperature of said oven (14) so that the fiber leaving said oven (14) has the desired temperature T.

6. Apparatus for coating an optical fiber (1), the apparatus comprising:
· a first applicator (13) for applying a first polymerizable coating material to the surface of the optical fiber;
· a first polymerization enclosure (15) for polymerizing said first material to obtain a primary coating;
· a second applicator (17) for applying a second polymerizable coating material to the surface of the optical fiber coated in said primary coating; and
· a second polymerization enclosure (19) for polymerizing said second material to obtain a secondary coating;
the apparatus being **characterized in that** it further comprises:
· an oven (14) situated after said polymerization enclosure (15) and ahead of said second applicator (17) to confer a temperature T on the optical fiber leaving said oven (14), said temperature T determining the temperature T' at which said second material polymerizes; and
· a temperature sensor (16) placed between said oven (14) and said second applicator (17) to servo-control the temperature of said oven (14) so that the fiber leaving said oven (14) has the desired temperature T.

7. Apparatus for coating an optical fiber (1), the apparatus comprising n assemblies, where n is an integer greater than or equal to 2, each assembly comprising:
· an applicator for applying a polymerizable coating material to the surface of the optical fiber; and
· a polymerization enclosure (15) for polymerizing said material to obtain a coating;
the apparatus being **characterized in that** it further comprises, for all integers k in the range 2 to n:
· between the polymerization enclosure of assembly k-1 and the applicator of assembly k, an oven for conferring to the coated optical fiber a temperature T on leaving said oven, said temperature T determining the temperature T' at which the material applied by the applicator of assembly k polymerizes; and
· a temperature sensor placed between said oven and the applicator of the assembly k to servo-control the temperature of said oven so that on leaving said oven the fiber has the desired temperature T.
